# EUROPEAN PATENT APPLICATION

(11) **EP 2 881 708 A1**
(43) Date of publication of application: **10.06.2015**
(21) Application number: 13195853.0
(22) Date of filing: 05.12.2013
(51) Int. Cl.: G01C 21/20

(54) **System and method for indoor localization using mobile inertial sensors and virtual floor maps**

(71) Applicant: Deutsche Telekom AG, 53113 Bonn (DE)
(72) Inventor: Hui, Pan, Hong Kong (HK); Peylo, Christoph, 49401 Damme (DE)
(74) Representative: Vossius & Partner Patentanwälte Rechtsanwälte mbB

(57) **Abstract**

The invention provides an indoor localization system and method for locating an electronic mobile device within an indoor environment. The indoor localization system comprises a moving status module adapted to compute the moving status of the electronic mobile device based on the analysis of data received from inertial sensors of the electronic device; a floor map processing module adapted to obtain a virtual floor map of the indoor environment; a basic map database module adapted to save the processed floor map; and a location correction module being adapted to determine the current location of the electronic mobile device based on the computed moving status and to correct the determined current location based on the virtual floor map.

## Description

### BACKGROUND

The present invention generally relates to an indoor localization system and method, more particularly to an indoor localization system and method using mobile inertial sensors and virtual floor map.

In the recent past, the use of indoor localization systems has grown considerably. For widespread adoption of real-time indoor localization systems in buildings, such as airports and railway stations, these systems must be able to provide accurate location estimations.

In addition to widely used localization systems, most localization systems employ a WiFi and a Radio Signal Strength Indicator based approach. The strengths of the signals received by a radio tag are used to estimate the location. However, due to the lack of reliable GPS signals and complex infrastructure assistance, traditional indoor localization methods cannot meet all the requirements.

WiFi-based indoor localization is common due to the wide used of WiFi and good accuracy. They mostly rely on WLANS and Received Signal Strength (RSS) values to decide on the location. C. Laoudias et al. (C. Laoudias et al.: "The airplace indoor positioning platform for android smart phones", Proceeding MDM '12 Proceedings of the 2012 IEEE 13th International Conference on Mobile Data Management, 312-315, 2012) presented an airplane indoor positioning platform for android smart phones. By analyzing the collected RSS as fingerprints, the location can be inferred at a good room level in which the positioning error is in the order of 2-4 m. In addition, an enhanced indoor localization system including a plurality of transmitting nodes arranged in different positions estimates the location from the RF signals received from the transmitting nodes has been presented in WO 2010/022797. However, great infrastructure assistance is needed for the localization, including the arrangement of WiFi.

There are some initial efforts on locating with inertial sensors. Oliver Woodman and Robert Harle (Woodman O., Harle R.: "Pedestrian localisation for indoor environments", Proceedings of the 10th international conference on Ubiquitous computing. 114-123, 2008) implemented a pedestrian localization for indoor environments. Their work combines a foot-mounted inertial unit, a detailed building model, and a particle filter to provide absolute position and shows good performance.

Fan Li et al. (Li F. et al.: "A reliable and accurate indoor localization method using phone inertial sensors", Proceedings of the 2012 ACM Conference on Ubiquitous Computing, 421-430, 2012) implemented an indoor localization application using mobile phone inertial sensors. They take great efforts on step length and orientation, and obtain a good accuracy of 2 m. However, some serious location error showed up in their work.

Therefore, there is a need for an indoor localization system and method that provides acceptable accuracy.

It is an object of the present invention to provide a system and a method which relies on mobile inertial sensors in order to locate without great infrastructure assistance. In particular, the present invention locates only with the analysis of the floor map and the data received from mobile inertial sensors, which takes advantage of the concept of inertial navigation, creating error models and using filter for estimating the position and direction of an electronic mobile device. Additionally, the present invention takes advantage of partitioning the floor map into separated areas to reduce the locating range. Some human assistance is also used to improve the overall performance.

Furthermore, the present invention uses a smart phone to do the data collection and may use the same smart phone to simplify the building model, in that the floor map together with some discrete processing to improve the localization performance is provided. Pedestrian route prediction is further adapted for the localization. A preprocessed floor map together with predicting the whole walking path effects the localization. Key areas, which might be marked manually, are provided in order to create a walking path before the localization. The walking path will be corrected from the continued learning of users' walking path data and will create a magnetic field to effect the direction and location of the electronic mobile device.

Preferably, the present invention creates some constraints to the digital floor map, and uses at least one of three walking models to correct the localization mistake and error, and these errors are corrected in real time.

### SUMMARY

According to one aspect of the present invention, an indoor localization system for locating an electronic mobile device within an indoor environment is provided, wherein the indoor localization system comprises a moving status module adapted to compute the moving status of the electronic mobile device based on the analysis of data received from inertial sensors of the electronic device; wherein a floor map processing module being adapted to obtain a virtual floor map of the indoor environment; wherein a basic map database module being adapted to save the processed floor map; and wherein a location correction module being adapted to determine the current location of the electronic mobile device based on the computed moving status and to correct the determined current location based on the virtual floor map is provided.

Furthermore, the indoor localization system can be an electronic mobile device.

The inertial sensors might include at least one of an accelerometer, a compass and a gyroscope.

The moving status module preferably adapted to compute a standard step status including step length and step frequency.

According to a further preferred embodiment the moving status module is further adapted to compute a moving step status including step number, step length and direction using a particle filter.

The step number is obtained by selecting useful waveforms from the accelerator using the current position of the electronic mobile device as obtained from the gyroscope.

The floor map processing module may further be adapted to create a discrete undirected graph representing a virtual floor map, wherein the floor map is divided into a grid configuration and partitioned into a plurality of sections based on key areas, which might be marked manually and each grid having a size of approximately 40 cm.

The virtual floor map may further comprise of additional restrictions and/or obstacles like closed doors, furniture or the like considered by the localization correction as non-possible locations for the electronic mobile device.

Furthermore, each of the distances is preferably a Euclidean distance.

Preferably, the location correction module is further adapted to use at least one of the following location correction models: a walking possibility model configured to compute the most possible walking area based on continued walking status; and/or a walking legality model configured to judge the legality of the current walking status; and/or a walking magnetic field model configured to correct the location based on a predicted path.

The location correction module may further be adapted to use the walking legality model as the first priority to correct the location error.

The walking possibility model may further be adapted to keep on updating the moving status of the electronic mobile device during the location process.

Preferably, the magnetic field model is further adapted to predict the path due to the shortest path and is being improved by learning the users moving path.

The indoor localization system may further be adapted to compute a localization error degree to judge if additional human assistance is needed.

According to another aspect of the present invention, a method is provided for indoor localization using an electronic mobile device within an indoor environment wherein the indoor localization method comprises: computing the moving status of the electronic mobile device based on the analysis of data received from inertial sensors of the electronic device; processing of a basic floor map to obtain a virtual floor map of the indoor environment; saving the processed floor map to a basic database; and determining the current location of the electronic mobile device based on the computed moving status and to correct the determined current location based on the virtual floor map.

In one exemplary embodiment, an indoor localization system comprises: Mobile inertial sensors including an accelerometer, a compass and a gyroscope to acquire data of a mobile device, moving status module for computing the moving status of the mobile device based on the data of mobile inertial sensors, a virtual floor map of the building and a location correction module for applying correction models and correcting the localization mistake and error.

According to another aspect, the indoor localization method comprises: forming a standard step status including step length and vibration, and collecting the moving step status as continued data while the user is walking; preprocessing the floor map in a discrete method, correcting the localization mistake and error via some processed map model.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Figure 1 illustrates a schematic architecture of an embodiment of an indoor localization system.
Figure 2 illustrates a flow diagram of an embodiment of an indoor localization system.
Figure 3 illustrates an example of a virtual floor map.
Figure 4 illustrates an example of a processed discrete undirected graph of a floor map.
Figure 5 illustrates an example of the moving magnetic field model.

### DETAILED DESCRIPTION

Some preferred embodiments are now described with reference to the drawings. For explanation purpose, various specific details are set forth, without departing from the scope of the present invention as claimed.

The present invention stems from the idea of locating an electronic mobile device in a new indoor environment without WIFI and infrastructure assistance. Only mobile inertial sensors are used to gather data of a mobile device. Then the location will be calculated and optimized. It is of great convenience to locate in a new environment using the present invention.

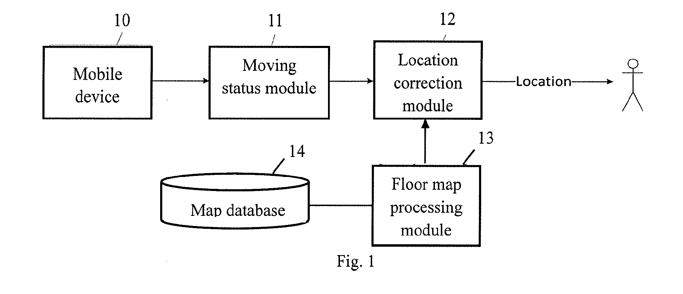

Fig. 1 is an example for a schematic architecture of an indoor localization system. In one embodiment, device 10 is an electronic mobile device able to gather data relating to its own movement. The electronic device consists of mobile inertial sensors such as an accelerometer, a gyroscope and a compass or the like able to obtain an accurate moving status. In one example, the accelerometer is used to get the vibration amplitude and frequency of the mobile device to create a pedometer. Compass and gyroscope are used to get the current attitude and direction of the mobile device. Then the data is processed in device 11, a moving status module, with a particle filter in order to get an accurate moving status including step length and step number. Device 13 is used for creating a virtual floor map. The processed floor map data is saved in device 14, a map database, as the basic map data. Location correction models for correcting the location error is done in device 12, a location correction module.

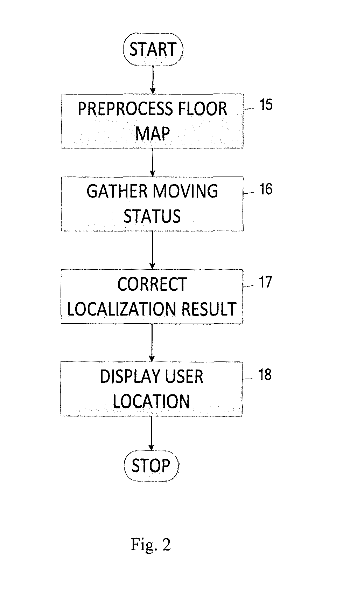

Fig. 2 illustrates an example method for the indoor localization system. This example method illustrates a flow diagram of procedures associated with indoor localization. In the form of a flow diagram, the method is shown and described as a series of acts.

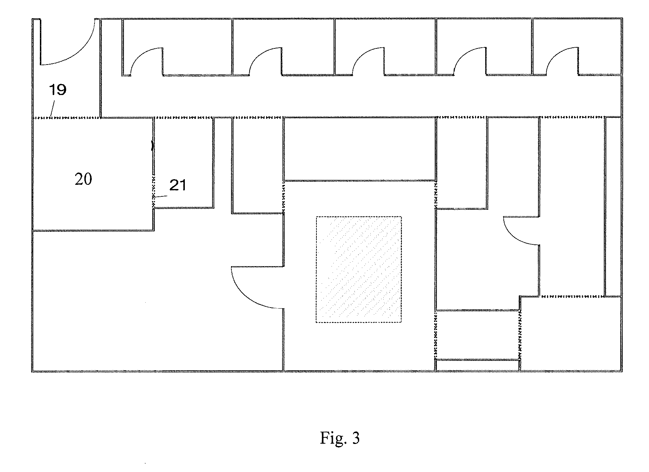

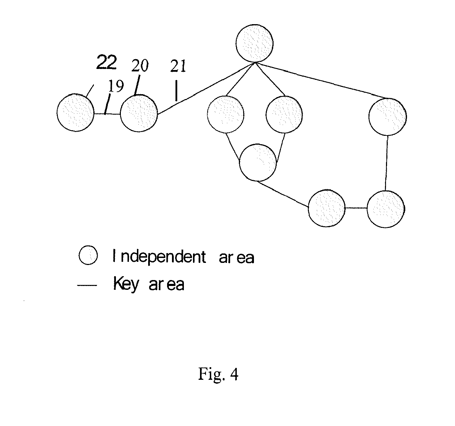

First, in step 15, the floor map is processed into a grid configuration. The length of a grid element is approximately 40cm, which is similar to a common step length. The basic map data might be saved in a map database. A series of key areas are marked manually in order to divide the floor map. Then the map is partitioned into a plurality of sections based on the number of visible key areas, preferably into small rectangular sections. When arriving at a key area, the location must be corrected into an accepted range no more than 40cm by the user. For example, in Fig. 3, elongated area 19 and elongated area 21 are key areas. Area 20 is an integrated and independent area (section), because elongated area 19 and elongated area 21 enclose this area. Additionally, elongated area 19 and elongated area 21 can always be seen from within area 20. From this, Fig. 4 is obtained.

In Fig. 4, each node is an integrated and independent area, such as node 22. The lines between the nodes are key areas. The map is processed in this undirected graph in order to reduce the localization boundary and process the 3D structure of the building. If the location accuracy can be kept in each node, the total accuracy will be enhanced as well. For example, if there is a staircase connecting two independent floors, the staircase can also be a key area. Then the two independent floors can be processed into one integrated undirected graph. The processed virtual floor map data might be saved in the map database. When approaching elongated area 19 and elongated area 21, the location needs to be corrected by correction principles. In other words, when moving through a section, e.g. 20 or 22, the location needs to be corrected by correction principles. Some human assistance might be needed in case the location is not corrected automatically. Based on the undirected graph, three models are employed in order to reduce the localization mistake and error comprising: walking possibility model, walking legality model and walking magnetic field model.

In the walking possibility model, each node is analyzed including the length and width of the area, the significance of the critical path between start node and destination, and the distance to the current position. Due to continued moving status and changing location, the model keeps updating. When locating to a "wrong" area is detected, the walking possibility model will obtain a priority list describing which area the user should be in.

In the walking legality model, constraints are added to the map. For example, when the user is trying to go through a wall, the walking legality model will show up a warning and automatically correct the location to a legal position nearby. The map constitutes of transparent obstacles, non-transparent obstacles, key areas and walking space. Some other constraints can also be added manually. For example, there is a locked door in front of the user, and then the action of going through the door is illegal.

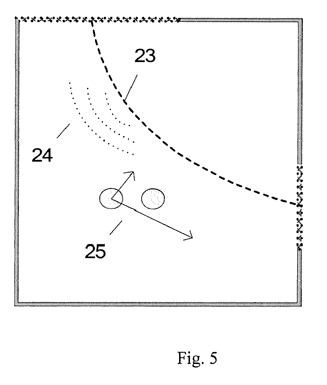

In the walking magnetic field model, a walking path is predicted in each node. For example, if there are only two doors in a node, the walking path is likely to be from one door to the other. The respective paths are built due to shortest path and can be amended from the continued learning of the users' moving paths. Then the paths are saved and added to the map, creating a magnetic field effecting the location correction. If the current walking path is partly following the predicted path, then the position will be corrected due to the strength of the magnetic field. Fig 5 shows an example of the walking magnetic field model. Line 23 is the predicted walking path that created the magnetic field 24. The user is proposed to walk forward and line 23 will affect the localization in such a manner that the next location will approach the predicted line 23.

Next, in step 16 (Fig. 2), a particle filter is used to process the data received from accelerometers, compass and gyroscope while the user is walking in order to get the walking status including step number, direction and step length.

In one embodiment, the attitude of the mobile device is obtained directly from the gyroscope. Then a useful wave form is obtained from the accelerometer according to the attitude of the mobile device. The raw data need to be smoothed and filtered via a low pass filter to remove any high frequency noise. From the result of the waveform, it is determined how the users are moving and how many steps they walked via the peaks and valleys of the waveform, i.e. as obtained from the magnitude and the vibration frequency of the accelerometer. The direction is recorded with the step information from the compass of the mobile device.

In another embodiment, the normal step length of the user is measured at the beginning of the localization. Then a walking frequency model is built to correct the user's step length, because the step length changes according to the walking frequency. The acceleration of the horizontal direction is also collected and computed via an integral method, as a reference to the step length.

Subsequently, in step 17, the processed data of moving status is transmitted to the location correction module. In this virtual map, a virtual point is moving to show up the current position corrected based on the above-mentioned models in real time. Thereafter, finally at step 18, a mobile application is developed to show the map and the location to the users.

If in the indoor localization system and method of the present invention as described above the location is not corrected automatically when walking within a section, i.e. while approaching a key area, a series of options might be displayed to help the user correct the location manually. Within the location error of 40 cm, a user can easily find his correct location. Moreover, a localization error degree is computed to judge if human assistance is needed. And the user can correct the location by moving the target in the virtual map to the right position.

In the present invention, the map is partitioned into small areas, that is, the integrated localization is divided into small-area localization. The location is always corrected in the key area manually, in other words, the line connecting the nodes of one small area. In particular, localization with inertial sensors in general has a good accuracy at the beginning, i.e. after entering an indoor facility, but becomes more inaccurate with walking distance. As the localization is corrected at each key area and the areas are kept relatively small the accuracy in each of these small areas can be kept in an acceptable range. And hence, the overall localization accuracy is enhanced.

As the present invention may be embodied in several forms without departing from the scope or essential characteristics thereof, it should be understood that the above-described embodiments are not limited by any of the details of the foregoing description, unless otherwise specified, but rather should be construed broadly within its scope as defined in the appended claims, and therefore all changes modifications that fall within the metes and bounds are therefore intended to be embraced by the appended claims.

## Claims

1. An indoor localization system for locating an electronic mobile device within an indoor environment, wherein the indoor localization system comprises:
a moving status module adapted to compute the moving status of the electronic mobile device based on the analysis of data received from inertial sensors of the electronic device;
a floor map processing module adapted to obtain a virtual floor map of the indoor environment;
a basic map database module adapted to save the processed floor map; and
a location correction module being adapted to determine the current location of the electronic mobile device based on the computed moving status and to correct the determined current location based on the virtual floor map.

2. The system of claim 1, wherein the indoor localization system is an electronic mobile device.

3. The system of any one of claims 1 to 2, wherein the inertial sensors include at least one of an accelerometer, a compass and a gyroscope.

4. The system of any one of claims 1 to 3, wherein the moving status module is adapted to compute a standard step status including step length and step frequency.

5. The system of any one of claims 1 to 4, wherein the moving status module is adapted to compute a moving step status including step number, step length and direction using a particle filter.

6. The system of claim 5, wherein the step number is obtained by selecting useful waveforms from the accelerator using the current position of the electronic mobile device as obtained from the gyroscope.

7. The system of any one of claims 1 to 6, wherein the floor map processing module is adapted to create a discrete undirected graph representing a virtual floor map, wherein the floor map is divided into a grid configuration and partitioned into a plurality of sections based on key areas.

8. The system of claim 7, wherein the key areas are marked manually.

9. The system of claim 7, wherein each grid has a size of approximately 40 cm.

10. The system of any one of claims 1 to 9, wherein the virtual floor map further comprises of additional restrictions and/or obstacles like closed doors, furniture or the like considered by the localization correction as non-possible locations for the electronic mobile device.

11. The system of any one of claims 1 to 10, wherein each of the distances is a Euclidean distance.

12. The system of any one of claims 1 to 11, wherein the location correction module is adapted to use at least one of the following location correction models:
a walking possibility model configured to compute the most possible walking area based on continued walking status; and/or
a walking legality model configured to judge the legality of the current walking status; and/or
a walking magnetic field model configured to correct the location based on a predicted path.

13. The system of claim 12, wherein the location correction module is adapted to use the walking legality model as the first priority to correct the location error.

14. The system of any one of claims 12 to 13, wherein the walking possibility model is adapted to keep on updating the moving status of the electronic mobile device during the location process.

15. The system of any one of claims 12 to 14, wherein the magnetic field model is adapted to predict the path due to the shortest path and is being improved by learning the users moving path.

16. The system of any one of claims 1 to 15, wherein the indoor localization system is adapted to compute a localization error degree to judge if additional human assistance is needed.

17. A method for indoor localization using an electronic mobile device within an indoor environment, wherein the indoor localization method comprises:
computing the moving status of the electronic mobile device based on the analysis of data received from inertial sensors of the electronic device;
processing of a basic floor map to obtain a virtual floor map of the indoor environment;
saving the processed floor map to a basic database; and
determining the current location of the electronic mobile device based on the computed moving status and to correct the determined current location based on the virtual floor map.
